# EUROPÄISCHE PATENTANMELDUNG

(11) **EP 4 817 716 A1**
(43) Veröffentlichungstag der Anmeldung: **07.10.2026**
(21) Anmeldenummer: 26165680.5
(22) Anmeldetag: 18.03.2026
(51) Int. Cl.: A63H 17/00, A63H 17/26, B60B 37/00

(54) **KLEMMBAUSTEIN ZUM HALTEN EINES RADES**

(30) Priorität: 03.04.2025 CN 202510417004
(71) Anmelder: Doubleeagle Industry (China) Limited, Shantou City, Guangdong (CN)
(72) Erfinder: Yang, Dunhua, N0.1 Yabao Road, Bantian Street, Shenzhen (CN)
(74) Vertreter: von Bülow & Tamada

(57) **Zusammenfassung**

Offenbart wird ein Klemmbaustein (23) zum Halten eines Rades (13) in einem Klemmbausteinmodell (2), umfassend:
- einen um eine Rotationsachse (26) drehbaren Nabenflansch (24) mit einer in Richtung der Rotationsachse (26) gesehenen Vorderseite und einer der Vorderseite gegenüberliegenden Rückseite,
wobei an der Vorderseite zur Rotationsachse (26) radial beabstandet wenigstens zwei in Umfangsrichtung um die Rotationsachse (26) wirkende Formschlusselemente (56, 28) zum Übertragen eines um die Rotationsachse (26) wirkenden Drehmomentes auf das Rad (13) gehalten sind, und
- einen an der Rückseite konzentrisch zur Rotationsachse (26) am Nabenflansch (24) gehaltenen Nabenzapfen (38) zum Lagern des Nabenflansches (24) an einer Radaufhängung (44),
- ein von den Formschlusselementen (56, 28) unabhängiges Lagerelement (32) zum axialen Halten eines Haltemittels (58), das eingerichtet ist, eine Axialbewegung zwischen dem Rad (13) und dem Nabenflansch (24) zu blockieren.

## Beschreibung

Die vorliegende Erfindung betrifft einen Klemmbaustein gemäß dem Oberbegriff des geltenden Anspruchs 1.

Einen solchen Klemmbaustein bietet die Firma Lego unter der Bezeichnung "Technic, Steering Wheel Hub 3 Pin Holes Round" mit der Teilenummer 35189 an.

Es ist Aufgabe der Erfindung, den bekannten Klemmbaustein zu verbessern.

Die Aufgabe wird durch die Merkmale der unabhängigen Ansprüche gelöst. Bevorzugte Weiterbildungen sind Gegenstand der abhängigen Ansprüche.

Ausgehend von einem Klemmbaustein zum Halten eines Rades in einem Klemmbausteinmodell mit einem um eine Rotationsachse drehbaren Nabenflansch mit einer in Richtung der Rotationsachse gesehenen Vorderseite und einer der Vorderseite gegenüberliegenden Rückseite, wobei an der Vorderseite zur Rotationsachse radial beanstandet wenigstens zwei in Umfangsrichtung um die Rotationsachse wirkenden Formschlusselemente zum Übertragen eines um die Rotationsachse wirkenden Drehmomentes auf das Rad gehaltenen sind und mit einem an der Rückseite konzentrisch zur Rotationsachse am Nabenflasch gehaltenen Nabenzapfen zum Lagern des Nabenflansches an einer Radaufhängung umfasst ein erfindungsgemäßer Klemmbaustein ein von den Formschlusselementen unabhängigen Lagerelementes zum axialen Halten eines Haltemittels, das eingerichtet ist, eine Axialbewegung zwischen dem Rad und dem Nabenflansch zu blockieren.

Dem angegebenen Klemmbaustein liegt die Überlegung zugrunde, dass der herkömmliche Klemmbaustein zur Übertragung eines Drehmoments auf das Rad um die Rotationsachse wirkende Formschlusselemente vorsieht, die zugleich auch die axiale Sicherung des Rades gegenüber dem Nabenflansch übernehmen. Diese Doppelfunktion stellt jedoch hohe Anforderungen an die Maßhaltigkeit und die Einfügegenauigkeit der Formschlusselemente. Bereits geringe Toleranzabweichungen können zu einer überbestimmten Lageführung führen, wodurch sich beim Zusammenbau des Modells mechanische Verspannungen einstellen oder die Bauteile beim Fügen verkanten. In der Praxis kann dies dazu führen, dass sich das Rad nur unter erhöhtem Kraftaufwand auf die Nabe aufstecken lässt oder im schlimmsten Fall überhaupt nicht korrekt montiert werden kann.

Hier greift der angegebene Klemmbaustein mit der Überlegung an, die Funktion der Drehmomentübertragung und die Funktion der axialen Fixierung konstruktiv voneinander zu trennen. Während die um die Rotationsachse wirkenden Formschlusselemente weiterhin der formschlüssigen Übertragung eines Drehmoments zwischen Rad und Nabenflansch dienen, wird die axial gerichtete Haltefunktion durch ein gesondertes Lagerelement bereitgestellt, das unabhängig von den Formschlusselementen wirkt. Dieses Lagerelement ist zur Aufnahme eines Haltemittels - vorzugsweise eines Axialfixierstiftes - ausgebildet, der das Rad gegen eine Bewegung entlang der Rotationsachse sichert.

Auf diese Weise werden die für die Drehmomentübertragung vorgesehenen Formschlusselemente von der Anforderung entlastet, gleichzeitig eine spielfreie axiale Arretierung zu gewährleisten. Dies erlaubt es, die Formschlusselemente mit größeren Toleranzen herzustellen, was nicht nur den Fertigungsaufwand reduziert, sondern insbesondere auch die Montage erleichtert. Die Gefahr des Verkantens oder der Verspannung beim Einfügen mehrerer gleichzeitig wirkender Formschlusselemente wird vermindert. Das Klemmbausteinmodell lässt sich so mit geringerer Kraft zusammenbauen, ist weniger anfällig für Fertigungstoleranzen und weist insgesamt ein robusteres und wiederholgenaueres Montageverhalten auf. Darüber hinaus ermöglicht die klare funktionale Trennung eine einfachere Demontage einzelner Komponenten sowie eine verbesserte Modularität bei der Konstruktion komplexer Klemmbaustein-Modelle.

In einer Weiterbildung des angegebenen Klemmbausteines ist das Lagerelement als Bolzenaufnahme zum Aufnehmen des Haltemittels in Form eines Sicherungsbolzens von der Vorderseite her zur Rückseite hin ausgebildet. Auf diese Weise lässt sich das Haltemittel von der dem Benutzer zugewandten Seite aus einführen, wodurch eine besonders montagefreundliche und gut zugängliche Verbindung geschaffen wird. Der Einsatz eines Sicherungsbolzens als Haltemittel bietet gegenüber alternativen Befestigungsmechanismen, wie etwa Schrauben oder Rastverbindungen, mehrere konstruktive und funktionale Vorteile.

Zum einen erfordert ein Sicherungsbolzen in der Regel keine Drehbewegung zum Einbringen, was insbesondere bei beengten Bauräumen oder schwer zugänglichen Montagestellen von Vorteil ist. Dies vereinfacht die manuelle Handhabung und reduziert den Kraft- und Koordinationsaufwand beim Zusammenbau. Darüber hinaus kann ein Sicherungsbolzen durch rein lineare Bewegung eingeführt und - je nach Ausgestaltung - ebenso einfach wieder entfernt werden, wodurch sich eine lösbare und wiederverwendbare Verbindung ergibt, ohne dass Werkzeuge erforderlich sind.

Ein weiterer Vorteil liegt darin, dass Sicherungsbolzen in verschiedenen Ausführungsformen realisierbar sind, wie etwa als steckbarer Stift, als Element mit formschlüssiger Verriegelung durch Quervorsprünge oder Nut-Feder-Passung, als bajonettartig wirkendes Element oder als federelastisch gehaltene Arretierung. Diese Gestaltungsfreiheit erlaubt es, den Grad der Haltekraft, die Demontagefähigkeit sowie das Spiel zwischen den Bauteilen an die jeweilige Anwendung anzupassen, ohne die geometrische oder funktionale Einheitlichkeit des Gesamtsystems zu beeinträchtigen.

Die Verwendung eines Sicherungsbolzens als separates Axialsicherungsmittel erlaubt somit eine konstruktiv einfache, toleranzunempfindliche und benutzerfreundliche Lösung zur axialen Fixierung des Rades am Nabenflansch, unabhängig davon, welche konkrete Wirkweise - beispielsweise Steck-, Klemm-, Rast- oder Drehverriegelung - dem Bolzen zugrunde liegt.

In einer zusätzlichen Weiterbildung des angegebenen Klemmbausteines besitzt die Bolzenaufnahme an einem zur Rückseite hin gerichteten Ende eine Halteschulter, an der axial wirkende Verriegelungselemente des Sicherungsbolzens auflegbar sind. Auf diese Weise lässt sich eine rein formschlüssige axiale Fixierung zwischen dem Sicherungsbolzen und der Bolzenaufnahme realisieren, ohne dass elastische Vorspannung oder reibschlüssige Haltekraft erforderlich ist.

Der Einsatz einer formschlüssigen Verriegelung bringt insbesondere den Vorteil mit sich, dass die Verbindung unabhängig von Materialsteifigkeiten, Klemmkräften oder Fertigungstoleranzen zuverlässig wirkt. Im Gegensatz zu reibschlüssigen oder federnden Arretierungen, die bei längerer Belastung, Materialermüdung oder wiederholter Montage an Haltekraft verlieren können, bleibt eine formschlüssige Verriegelung langzeitstabil und spielfrei, sofern die geometrischen Passflächen definiert ausgelegt sind.

Zudem lässt sich mit einer solchen Halteschulter die Kraftrichtung eindeutig führen: Eine auf Zug in axialer Richtung wirkende Belastung - beispielsweise beim Ziehen oder beim seitlichen Verdrehen des Rades im Spielbetrieb - wird über die Anlage des Verriegelungselements an der Schulter mechanisch aufgenommen und nicht durch die Scherfestigkeit eines Pins oder durch Klemmreibung gehalten. Damit wird die Bauteilbeanspruchung auf planbare Kontaktflächen verteilt und nicht punktuell konzentriert, was der Dauerhaltbarkeit und der Sicherheit der Verbindung zugutekommt.

Ein weiterer Vorteil ist die konstruktive Klarheit: Die Verriegelungsfunktion ist eindeutig einer geometrischen Fläche (der Halteschulter) zugewiesen, wodurch sich Montage, Demontage und ggf. auch eine automatische Arretierung bei Einschnapp- oder Einschiebbewegungen einfacher realisieren lassen. Diese definierte Anlagefläche ermöglicht darüber hinaus eine präzise Begrenzung des Axialspiels und begünstigt die Entwicklung spielfreier Baugruppen.

In einer weiteren Weiterbildung des angegebenen Klemmbausteines ist das Verriegelungselement als auf die Halteschulter axial auflegbare Bajonettnase ausgebildet, wobei die Bolzenaufnahme eine Bajonettnut zum Führen der Bajonettnase besitzt. Auf diese Weise wird eine radial und axial formschlüssige Verbindung geschaffen, die ohne federnde oder elastisch verformbare Elemente auskommt.

Der Verzicht auf federnde Haken oder Schnappverbindungen erhöht die strukturelle Steifigkeit der Verbindung, insbesondere in radialer Richtung, und erlaubt eine exakte, definierte Positionierung des Sicherungsbolzens innerhalb der Bolzenaufnahme. Die Verriegelung erfolgt dabei nicht durch Materialverformung, sondern ausschließlich durch das Führen und Anlegen fester Geometrien - nämlich der Bajonettnase entlang der Bajonettnut und deren Anlage an einer axialen Haltefläche.

Hierdurch wird die Verbindung unempfindlich gegenüber Alterung, Materialermüdung oder Temperaturänderungen, die bei elastischen Elementen zu einem Funktionsverlust führen könnten. Zudem ermöglicht die Bajonettverbindung eine schnelle, werkzeuglose Montage bei gleichzeitig hoher Funktionssicherheit und Wiederholgenauigkeit. Die Drehbewegung zum Einrasten kann mechanisch geführt, begrenzt und kontrolliert werden, was insbesondere bei modularen oder automatisierten Baugruppen von Vorteil ist.

Darüber hinaus lässt sich durch die Gestaltung der Bajonettnut das Maß der Einrastdrehung und die Verriegelungsrichtung eindeutig definieren, was eine Montagefehlervermeidung und eine intuitive Benutzerführung unterstützt. Auch das Axialspiel kann durch die Geometrie der Nase und der Schulter präzise eingestellt werden, was zu einer spielfreien und belastbaren Verbindung führt, die dauerhaft hoch beanspruchbar ist.

In einer anderen Weiterbildung des angegebenen Klemmbausteines ist die Bolzenaufnahme bereichsweise rohrförmig mit einem Radialfenster im Bereich der Halteschulter ausgebildet. Auf diese Weise wird eine Sichtbarkeit des Verriegelungselementes, insbesondere der Bajonettnase, während des Einsetzens und Drehens des Sicherungsbolzens ermöglicht, was den Aufbau des Klemmbausteinmodells erleichtert und unterstützt.

Das Radialfenster dient als visuelle Kontrolleinrichtung, über die der Benutzer den korrekten Sitz und die vollständige Verriegelung des Haltemittels unmittelbar erkennen kann. Dies ist insbesondere dann von Vorteil, wenn die Bolzenaufnahme tief in eine Baugruppe integriert ist oder sich die Halteschulter in einem nicht vollständig sichtbaren Bereich befindet. Durch das Sichtfenster kann geprüft werden, ob die Bajonettnase vollständig auf der Halteschulter aufgelegen ist und sich in der Endstellung der Bajonettnut befindet.

Darüber hinaus kann das Fenster auch als Montagehilfe fungieren: Beim Einsetzen des Sicherungsbolzens lässt sich anhand der Sichtbarkeit der Verriegelungsgeometrie oder anhand von Passmarkierungen erkennen, wann die Drehbewegung abgeschlossen ist und die formschlüssige Verriegelung korrekt eingerastet wurde. Dies reduziert das Risiko unvollständiger Montage, steigert die Benutzerfreundlichkeit und verbessert die Wiederholbarkeit des Montagevorgangs.

Je nach Ausgestaltung kann das Radialfenster zudem zur Funktionsüberwachung bei bewegten Modellen eingesetzt werden, etwa zur Kontrolle, ob sich der Sicherungsbolzen unter Belastung gelöst hat oder sich in der vorgesehenen Position befindet. Durch die Kombination aus Sichtprüfung und mechanischer Führung wird somit eine funktionale wie auch montagepraktische Verbesserung erreicht.

In einer noch anderen Weiterbildung des angegebenen Klemmbausteins ist das Lagerelement konzentrisch zur Rotationsachse angeordnet. Auf diese Weise kann das Haltemittel nicht nur zur axialen Fixierung des Rades gegenüber dem Nabenflansch herangezogen werden, sondern zugleich eine radiale Zentrierung zwischen Rad und Nabe gewährleisten.

Die konzentrische Anordnung des Lagerelements erlaubt es, den Sicherungsbolzen in einer zentralen Achsbohrung zu führen, wodurch sich das Rad bei der Montage automatisch zur Rotationsachse hin ausrichtet. Diese Maßnahme trägt dazu bei, Unwuchten oder Fluchtungsfehler im montierten Zustand zu vermeiden und fördert die Laufruhe des rotierenden Bauteils, was sowohl für realistische Modellfunktionen als auch für die Lebensdauer angrenzender Verbindungselemente von Vorteil ist.

Darüber hinaus entsteht durch die Lage des Lagerelements im Zentrum eine symmetrische Kraftverteilung entlang der Achse, wodurch sich axiale und radiale Belastungspfade besser trennen und definieren lassen. Dies erhöht die strukturelle Integrität der Baugruppe unter dynamischer Belastung und vereinfacht konstruktiv die Auslegung von Lager- und Verbindungselementen.

Insbesondere bei Anwendungen mit drehbaren Komponenten - etwa rotierenden Rädern in Fahrzeugmodellen - verbessert die konzentrische Lage des Sicherungselements die Rundlaufeigenschaften und ermöglicht eine konstruktiv saubere Kopplung an vorgesehene Drehachsen oder Wellen. Die gleichzeitige Zentrierung und Fixierung über ein gemeinsames, koaxiales Element reduziert den Bauraum und die Zahl der Einzelteile und trägt so zu einer kompakten, funktionsintegrierten Gestaltung bei.

Gemäß einem weiteren Aspekt der Erfindung umfasst ein Klemmbaustein zum Blockieren einer Axialbewegung zwischen einem Rad und einem um eine Rotationsachse drehbaren Nabenflansch eines der bereits erläuterten Klemmbausteine einen parallel zur Rotationsachse ausrichtbaren Schaft mit einem ersten Ende und einem dem ersten Ende gegenüberliegenden zweiten Ende, einem am ersten Ende ausgebildeten ersten axial wirkenden Formschlusselement zum Blockieren der Axialbewegung des Rades zum Schaft, und einem am zweiten Ende ausgebildeten zweiten axial wirkenden und radial steifen Formschlusselement zum Blockieren der Axialbewegung des Schaftes zum Nabenflansch.

Dem angegebenen Klemmbaustein liegt die Überlegung zugrunde, dass bei herkömmlichen Systemen - wie etwa im LEGO-Technikbaukasten - zur Fixierung rotierender Komponenten überwiegend federnde Rastverbindungen, Klemmwirkungen oder elastisch wirkende Kupplungselemente eingesetzt werden. Diese Lösungen sind zwar einfach in der Handhabung, beruhen jedoch auf Reibschluss oder elastischer Vorspannung und bieten daher keine definierte Verriegelungsgeometrie. Insbesondere bei häufigem Auf- und Abbau, bei thermischen Einflüssen oder bei größeren Modellen kann die Haltekraft solcher Verbindungen nachlassen. Zudem fehlt es diesen Lösungen an einer klaren Führung und Fixierung des Bauteils in radialer Richtung, was zu unerwünschtem Spiel, Unrundlauf oder Verdrehung führen kann.

Hier greift der angegebene Klemmbaustein mit dem Vorschlag an, die axiale Verriegelung des Rades gegenüber dem Nabenflansch über ein zweiteilig wirkendes Formschlusselement bereitzustellen, das beidseitig an einem zentralen Schaft ausgebildet ist. Das erste Formschlusselement am vorderen Ende wirkt dabei direkt auf das Rad und verhindert dessen axiale Bewegung in Richtung des Nabenflansches. Das zweite Formschlusselement am rückwärtigen Ende ist dagegen so gestaltet, dass es in eine entsprechend ausgebildete Gegenstruktur des Nabenflansches - beispielsweise eine Bajonettnut oder eine stirnseitige Aufnahme - eingreifen kann. Dieses zweite Formschlusselement ist radial steif ausgebildet, das heißt, es verriegelt formschlüssig ohne elastische Nachgiebigkeit, und ist so konzipiert, dass es dauerhaft und zuverlässig axialen Kräften standhält, ohne auf Federung oder Materialspannung angewiesen zu sein.

Auf diese Weise entsteht eine doppelseitig formschlüssige, vollständig mechanisch definierte Verriegelungseinheit, bei der sowohl das Rad als auch der Nabenflansch gegen eine Axialbewegung relativ zueinander fixiert sind. Der Einsatz eines radial steifen, drehverriegelbaren Formschlusselements - wie es etwa bei einem Bajonettverschlussprinzip realisiert ist - stellt ein neuartiges Element im Bereich der Klemmbausteinmechanik dar, das insbesondere im Vergleich zu den im Stand der Technik bekannten rastenden oder klemmsitzenden Verbindungen eine höhere Wiederholgenauigkeit, Langlebigkeit und Spielfreiheit bietet. Gleichzeitig erlaubt die Gestaltung eine intuitive und schnelle Montage durch einfaches Einführen und Verdrehen, ohne dass elastische Kräfte überwunden werden müssen. Damit erschließt der Klemmbaustein eine neue Klasse robuster, mechanisch klar definierter Verbindungen im Klemmbausteinmodellbau.

In einer Weiterbildung des angegebenen Klemmbausteines ist der Schaft als Hohlschaft mit darin gehaltenen in Umfangsrichtung wirkenden Formschlusselementen ausgebildet. Auf diese Weise lassen sich die Formschlusselemente mehrfach funktional nutzen: Einerseits dienen sie als Drehhilfe beim Verriegelungsvorgang - beispielsweise im Rahmen einer Bajonettverbindung -, andererseits fungieren sie als radial vorspringende Strukturen, die kraft- oder formschlüssig mit korrespondierenden Aufnahmen anderer Klemmbausteine zusammenwirken können.

Durch die Ausbildung als Hohlschaft mit umlaufenden Formschlusselementen - etwa in Form von Stegen, Nasen oder Rippen - kann ein Benutzer das Haltemittel bei der Montage sicher greifen und gezielt verdrehen. Dies erleichtert insbesondere bei kleinformatigen oder teilverdeckten Baugruppen die Handhabung und reduziert das Risiko eines unsachgemäßen Einsetzens. Gleichzeitig lässt sich das Haltemittel durch seine äußere Geometrie nahtlos in bestehende Klemmbaustein-Systeme integrieren: Die radialen Vorsprünge können so gestaltet sein, dass sie in standardisierte Aufnahmelöcher, Klemmbuchsen oder Clips anderer Bausteine eingreifen, wodurch zusätzliche mechanische Verbindungen geschaffen werden.

Diese Mehrfachfunktionalität erlaubt eine weitergehende Integration des Sicherungselements in die Baustruktur - etwa als kombinierter Haltestift und Verbindungselement - und trägt somit zu einer erhöhten Modularität und konstruktiven Flexibilität bei. Darüber hinaus kann durch gezielte Gestaltung der Umfangselemente ein definierter Montagedrehwinkel realisiert werden, der nicht nur als mechanische Begrenzung dient, sondern auch eine taktil spürbare Endposition signalisiert, wodurch die Bedienbarkeit zusätzlich verbessert wird.

In einer besonderen Weiterbildung des angegebenen Klemmbausteins besitzt der Schaft zum zweiten Ende hin gesehen unterhalb des ersten axial wirkenden Formschlusselements eine Anschlagschulter. Auf diese Weise wird eine räumlich klar definierte Trennstelle zwischen zwei Bauelementen geschaffen - insbesondere zwischen dem auf dem Schaft geführten Rad und dem am entgegengesetzten Ende angeordneten Nabenflansch.

Die Anschlagschulter bildet eine axiale Positionierfläche, gegen die sich das Rad während der Montage abstützt, und dient somit als Referenzanschlag für dessen endgültige Einbaulage auf dem Schaft. Gleichzeitig trennt sie das Rad mechanisch und funktional von dem unterhalb gelegenen Abschnitt des Schaftes, der für die Verriegelung im Bereich des Nabenflansches vorgesehen ist. Durch diese gestufte Ausbildung kann das Rad während der Montage gezielt bis zur Schulter geführt werden, ohne dabei mit der Verriegelungsgeometrie am zweiten Ende in Konflikt zu geraten.

Diese konstruktive Maßnahme ermöglicht eine zweistufige Montageführung: Zunächst wird das Rad axial auf den Schaft geschoben, bis es an der Anschlagschulter anliegt, wobei das erste Formschlusselement dessen Bewegung nach vorn blockiert. Anschließend kann der hintere Abschnitt des Schaftes - insbesondere das zweite axial wirkende Formschlusselement - unabhängig davon in eine entsprechende Aufnahme des Nabenflansches eingeführt und dort verriegelt werden.

Durch diese funktionale Entkopplung beider Enden des Schaftes können Rad und Nabe unabhängig voneinander gefügt und positioniert werden, was die Montage erleichtert, Toleranzprobleme reduziert und insbesondere bei wiederholter Demontage die Bauteilbeanspruchung minimiert. Zudem lässt sich durch die Schulter ein definiertes Maß für die axiale Lage des Rades herstellen, was wiederum zu einem gleichmäßigen Laufverhalten und einem präzisen Sitz in der Gesamtbaugruppe beiträgt.

Gemäß einem weiteren Aspekt der Erfindung umfasst ein Klemmbausteinmodell ein Fahrzeugchassis, an dem ein Radlager gehalten ist, wobei am Radlager ein erster der angegebenen Klemmbaustein und wobei an diesem Klemmbaustein ein Rad gehalten und mittels eines weiteren der angegebenen Klemmbausteine axial fixiert ist.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine Ansicht eines unfertig aufgebauten Klemmbausteinmodells,
Fig. 2a eine Explosionsansicht eines Radlagers und eines daran befestigbaren Rades,
Fig. 2b das Radlagers und das daran befestigte Rad der Fig. 2a in einer Schnittansicht,

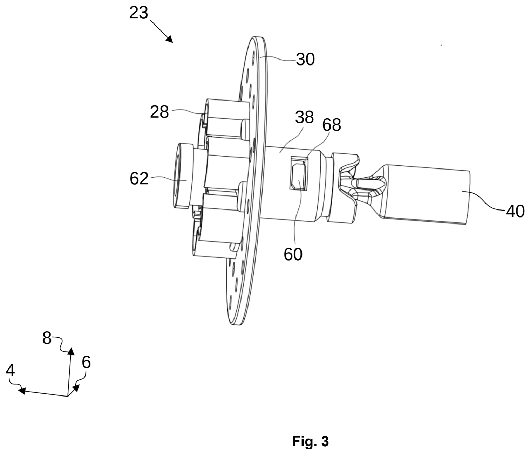

Fig. 3 in einer perspektivischen Ansicht einen Radflansch in dem Radlager der Figs. 2a und 2b,

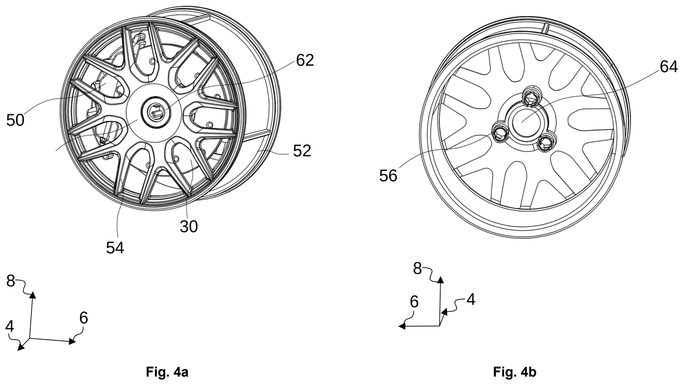

Fig. 4a das Rad der Figs. 2b und 2b aus einer ersten Perspektive, und
Fig. 4b das Rad der Figs. 2b und 2b aus einer zweiten Perspektive.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

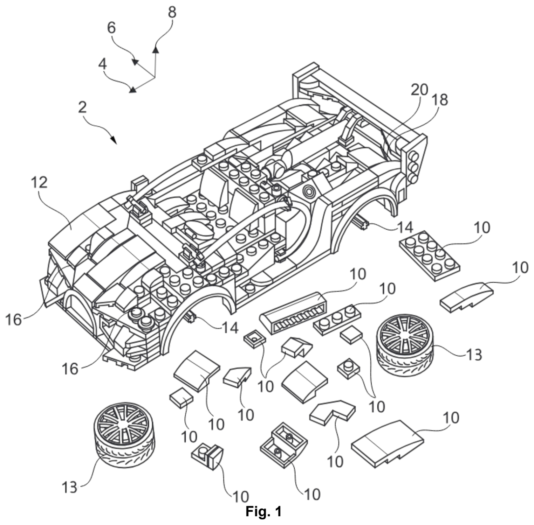

Es wird auf Fig. 1 Bezug genommen, welche eine Ansicht eines noch nicht vollständig aufgebauten Klemmbausteinmodells 2 zeigt.

Das Klemmbausteinmodell 2 ist in der dargestellten Ausführung als in einer Längsrichtung 4 bewegbares Fahrzeug ausgebildet, das sich in der Längsrichtung 4, einer Querrichtung 6 (quer zur Längsrichtung 4) sowie einer Höhenrichtung 8 (quer zur Längsrichtung 4 und zur Querrichtung 6) erstreckt.

Das gezeigte Fahrzeug besteht aus einer Vielzahl von Klemmbausteinen 10, die in Fig. 1 aus Gründen der Übersichtlichkeit nicht alle einzeln referenziert sind. Jeder Klemmbaustein 10 ist als wiederverwendbares Element zum modularen und skalierbaren Aufbau des Klemmbausteinmodells 2 ausgebildet. Die Bausteine 10 folgen einem standardisierten Rastermaß, das eine nahtlose Verbindung unterschiedlich großer und geformter Bausteine gewährleistet. Die Verbindung erfolgt durch ein mechanisches Klemmprinzip, bei dem nicht weiter referenzierte Vorsprünge - wie Noppen oder Stifte - in komplementäre, ebenfalls nicht referenzierte Vertiefungen eingepresst werden, wodurch eine stabile, aber lösbare Verbindung geschaffen wird. Diese modulare Bauweise erlaubt nahezu unbegrenzte Kombinationsmöglichkeiten, sodass die Bausteine 10 flexibel zusammengesetzt, getrennt und wiederverwendet werden können.

Das in Fig. 1 gezeigte Fahrzeug dient lediglich als beispielhafte Ausführungsform des Klemmbausteinmodells 2 und wird daher im Folgenden nur in seinen wesentlichen Elementen erläutert. Es umfasst ein Chassis 12, das fahrbar auf Rädern getragen ist. Im Bauzustand gemäß Fig. 1 sind die Radachsen 14 bereits montiert, die Räder 13 jedoch noch nicht aufgesteckt. An der in Längsrichtung 4 gesehenen Vorderseite des Fahrzeugs sind Bausteine vorgesehen, die im montierten Zustand als Vorderlichter 16 fungieren. In analoger Weise sind an der rückwärtigen Stirnseite des Fahrzeugs Bausteine vorgesehen, die im Endzustand Rücklichter 18 sowie Bremslichter 20 bilden.

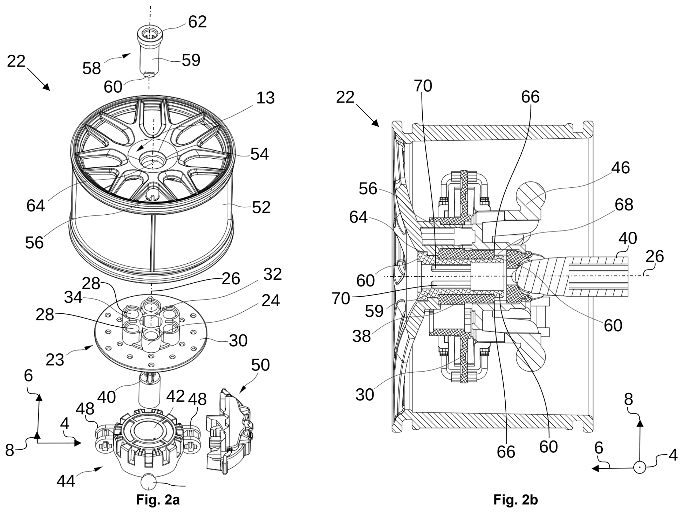

In Fig. 1 sind die Räder 13 unmittelbar auf den Radachsen 14 gehalten, was sich insbesondere für motorisierte Klemmbausteinmodelle 2 oder solche, in denen Funktionsdetails - etwa die Bremsanlage - möglichst realitätsnah abgebildet werden sollen, als ungeeignet erweist. Aus diesem Grund wird im Folgenden eine alternative Radbaugruppe 22 beschrieben, auf die unter Bezugnahme auf die Figuren 2a und 2b näher eingegangen wird.

Die Radbaugruppe 22 umfasst eines der Räder 13, das zur Montage auf einen ersten Klemmbaustein 23 mit einem Nabenflansch 24 eingerichtet ist. Das Rad 13 ist hohlzylindrisch ausgeführt und an einer Stirnseite geöffnet, sodass es auf den Nabenflansch 24 aufgeschoben werden kann.

Der Nabenflansch 24 ist rotationssymmetrisch um eine Rotationsachse 26 der Radbaugruppe 22 ausgebildet und weist an seiner dem Rad 13 zugewandten Stirnseite mehrere - in der vorliegenden Ausführung sechs - Aufnahmeöffnungen 28 auf, die gleichmäßig im Umfang um die Rotationsachse 26 verteilt sind. Die Aufnahmeöffnungen 28 sind in einer gemeinsamen radialen Ebene angeordnet und dienen, wie nachfolgend näher beschrieben wird, zur formschlüssigen Übertragung eines um die Rotationsachse 26 wirkenden Drehmoments zwischen Nabenflansch 24 und Rad 13.

Die gleichmäßige, drehsymmetrische Anordnung der Aufnahmeöffnungen 28 erlaubt eine montagefreundliche und toleranzunempfindliche Verbindung, da das Rad 13 in mehreren Relativstellungen zur Achse aufgesetzt werden kann, ohne dass eine definierte Ausrichtposition erforderlich ist. Darüber hinaus gewährleistet die Mehrfachverteilung der Aufnahmeöffnungen eine gleichmäßige Krafteinleitung und damit eine hohe Dauerbelastbarkeit der Verbindung.

An der dem Rad 13 abgewandten Rückseite des Nabenflansches 24 schließt sich eine Bremsscheibe 30 an, die koaxial zur Rotationsachse 26 liegt und drehfest mit dem Nabenflansch 24 verbunden ist. Die Bremsscheibe 30 ist gemäß Fig. 2a mit mehreren Verziehungsaussparungen versehen, welche der stilisierten Darstellung von Kühlluftdurchbrüchen realer Bremsscheiben dienen.

Konzentrisch zum Nabenflansch 24 ist eine Bolzenaufnahme 32 geführt, an deren Mantelfläche zwei - in Umfangsrichtung gesehen - drehsymmetrisch angeordnete Bajonettnuten 34 ausgebildet sind. Auf diese wird im Weiteren näher eingegangen. Die Bolzenaufnahme 32 ist in ein Aufnahmerohr 38 eingebettet, das auf der dem Rad 13 zugewandten Seite durch die Aufnahmeöffnungen 28 radial umschlossen ist und sich auf der gegenüberliegenden Seite - jenseits der Bremsscheibe 30 - als Rohrfortsatz ausbildet. An dessen rückwärtigem Ende ist ein Kardangelenkpartner 40 zur Kopplung an ein Antriebselement angeformt.

Der Kardangelenkpartner 40 ist durch eine Lageröffnung 42 eines Radlagers 44 geführt, sodass das Aufnahmerohr 38 im zusammengebauten Zustand drehbar in der Lageröffnung 42 gelagert ist. Am Radlager 44 sind Kugelgelenkaufnahmen 46 ausgebildet, die eine drehbare Lagerung des Radlagers 44 zur Nachbildung einer Lenkfunktion ermöglichen. Über in an sich bekannter Weise befestigte Kraftaufnahmeelemente 48 können Lenkkräfte eingeleitet werden, welche das Radlager 44 um die Kugelgelenkaufnahmen 46 schwenken. Das Kardangelenk sorgt in diesem Zusammenhang für eine flexible Übertragung von Antriebskräften bei gleichzeitiger Beweglichkeit.

Zur weiteren Funktionsmodellierung kann am Radlager 44 ein Bremssattel 50 befestigt werden; dessen genaue Ausgestaltung ist für das Verständnis der vorliegenden Ausführungsform jedoch nicht von Belang.

Wie bereits zuvor ausgeführt, sind die Aufnahmeöffnungen 28 in einer gemeinsamen radialen Ebene angeordnet und zur Drehmomentübertragung zwischen Nabenflansch 24 und Rad 13 vorgesehen. Hierzu weist das Rad 13 eine Radfelge 52 auf, die stirnseitig - dem Nabenflansch 24 axial gegenüberliegend - mit einer Deckplatte 54 verschlossen ist. Die Deckplatte 54 ist mit mehreren, nicht näher referenzierten Durchgangsöffnungen versehen, durch welche stilisierte Speichen modelliert werden. An der Deckplatte 54 sind auf der dem Nabenflansch 24 zugewandten Seite mehrere Drehmomentübertragungsstifte 56 radial auf einer gemeinsamen Ebene und in äquidistanten Umfangsabständen um die Rotationsachse 26 gehalten. Diese lassen sich in die korrespondierenden Aufnahmeöffnungen 28 axial einschieben. Die Drehmomentübertragungsstifte 56 können grundsätzlich in Anlehnung an LEGO-Technic-Pins, beispielsweise gemäß Teilenummer 2780, ausgebildet sein und dort - sofern erwünscht - verrasten. Eine Verrastung oder Klemmung ist für die Funktion der Drehmomentübertragung jedoch nicht erforderlich; es genügt ein formschlüssiger Eingriff.

Unabhängig von der Drehmomentübertragung wird das Rad 13 über einen Sicherungsbolzen 58 am Klemmbaustein 23 mit dem Nabenflansch 24 axial befestigt. Der Sicherungsbolzen 58 umfasst ein Hohlrohr 59 mit einem in die Bolzenaufnahme 32 einführbaren ersten Ende, das mit zwei radial abstehenden und drehsymmetrisch zur Rotationsachse 26 angeordneten Bajonettnasen 60 versehen ist. Am dem ersten Ende gegenüberliegenden zweiten Ende des Hohlrohrs 59 ist ein Fixierflansch 62 ausgebildet. Nicht alle Bajonettnasen 60 sind in den Figuren separat mit Bezugszeichen versehen.

Zur axialen Sicherung des Rades 13 am Nabenflansch 24 wird der Sicherungsbolzen 58 durch eine zentrale Aufnahmeöffnung 64 hindurchgeführt. Die Bajonettnasen 60 werden dabei in die Bajonettnuten 34 der Bolzenaufnahme 32 eingeführt und axial in Richtung des Kardangelenks 40 verschoben. Sobald der Fixierflansch 62 an der Deckplatte 54 des Rades 13 anliegt, wird der Sicherungsbolzen 58 um die Rotationsachse 26 verdreht, sodass die Bajonettnasen 60 auf radial innen liegenden Halteschultern 66 im Aufnahmerohr 38 zur Anlage kommen und der Sicherungsbolzen 58 nicht mehr axial aus der Bolzenaufnahme 32 herausgezogen werden kann. Damit ist das Rad 13 axial am Nabenflansch 24 gesichert.

Zur optischen Unterstützung beim Einführen und Drehen des Sicherungsbolzens 58 sind im Aufnahmerohr 38 Radialfenster 68 vorgesehen, über die die Stellung der Bajonettnasen 60 sichtbar ist.

Der Sicherungsbolzen 58 kann prinzipiell auf beliebige Weise verdreht werden. Bevorzugt sind jedoch im Inneren des Hohlrohrs 59 Werkzeugaufnahmen 70 ausgebildet, die als in Umfangsrichtung wirkende Formschlusselemente wirken und das Ansetzen eines Hilfswerkzeugs zur Verdrehung ermöglichen.

### Bezugszeichenliste

- 2: Klemmbausteinmodell / Fahrzeugmodell
- 4: Längsrichtung
- 6: Querrichtung
- 8: Höhenrichtung
- 10: Klemmbaustein
- 12: Chassis
- 13: Rad
- 14: Radachse
- 16: Vorderlicht
- 18: Rücklicht
- 20: Bremslicht
- 22: Radbaugruppe
- 23: Erster Klemmbaustein mit Nabenflansch
- 24: Nabenflansch
- 26: Rotationsachse
- 28: Aufnahmeöffnung (im Nabenflansch zur Drehmomentübertragung)
- 30: Bremsscheibe
- 32: Bolzenaufnahme
- 34: Bajonettnut
- 38: Aufnahmerohr
- 40: Kardangelenkpartner
- 42: Lageröffnung
- 44: Radlager
- 46: Kugelgelenkaufnahme
- 48: Kraftaufnahmeelement
- 50: Bremssattel
- 52: Radfelge
- 54: Deckplatte
- 56: Drehmomentübertragungsstift
- 58: Sicherungsbolzen
- 59: Hohlrohr (Teil des Sicherungsbolzens)
- 60: Bajonettnase
- 62: Fixierflansch
- 64: Zentrale Aufnahmeöffnung
- 66: Halteschulter
- 68: Radialfenster
- 70: Werkzeugaufnahme (Formschlusselemente im Hohlrohr)

## Patentansprüche

1. Klemmbaustein (23) zum Halten eines Rades (13) in einem Klemmbausteinmodell (2), umfassend:
- einen um eine Rotationsachse (26) drehbaren Nabenflansch (24) mit einer in Richtung der Rotationsachse (26) gesehenen Vorderseite und einer der Vorderseite gegenüberliegenden Rückseite,
wobei an der Vorderseite zur Rotationsachse (26) radial beabstandet wenigstens zwei in Umfangsrichtung um die Rotationsachse (26) wirkende Formschlusselemente (56, 28) zum Übertragen eines um die Rotationsachse (26) wirkenden Drehmomentes auf das Rad (13) gehalten sind, und
- einen an der Rückseite konzentrisch zur Rotationsachse (26) am Nabenflansch (24) gehaltenen Nabenzapfen (38) zum Lagern des Nabenflansches (24) an einer Radaufhängung (44),
**gekennzeichnet durch**
- ein von den Formschlusselementen (56, 28) unabhängiges Lagerelement (32) zum axialen Halten eines Haltemittels (58), das eingerichtet ist, eine Axialbewegung zwischen dem Rad (13) und dem Nabenflansch (24) zu blockieren.

2. Klemmbaustein (23) nach Anspruch 1, wobei das Lagerelement (32) als Bolzenaufnahme (32) zum Aufnehmen des Haltemittels (58) in Form eines Sicherungsbolzens (58) von der Vorderseite her zur Rückseite hin ausgebildet ist.

3. Klemmbaustein (23) nach Anspruch 2, wobei die Bolzenaufnahme (32) an einem zur Rückseite hin gerichteten Ende eine Halteschulter (66) besitzt, an der ein axial wirkendes Verriegelungselement (60) des Sicherungsbolzens (58) auflegbar ist.

4. Klemmbaustein (23) nach Anspruch 3, wobei das Verriegelungselement (60) als auf die Halteschulter (66) axial auflegbare Bajonettnase (60) ausgebildet ist und die Bolzenaufnahme (32) eine Bajonettnut (34) zum Führen der Bajonettnase (60) besitzt.

5. Klemmbaustein (23) nach Anspruch 3 oder 4, wobei die Bolzenaufnahme (32) bereichsweise rohrförmig (38) mit einem Radialfenster (68) im Bereich der Halteschulter (66) ausgebildet ist.

6. Klemmbaustein (23) nach einem der vorstehenden Ansprüche, wobei das Lagerelement (32) konzentrisch zur Rotationsachse (26) angeordnet ist.

7. Klemmbaustein (58) zum Blockieren einer Axialbewegung zwischen einem Rad (13) und einem um eine Rotationsachse (26) drehbaren Nabenflansch (24) eines weiteren Klemmbausteins nach einem der vorstehenden Ansprüche, umfassend:
- einen parallel zur Rotationsachse (26) ausrichtbaren Schaft (59) mit einem ersten Ende und einem dem ersten Ende gegenüberliegenden zweiten Ende,
- ein am ersten Ende ausgebildetes erstes axial wirkendes Formschlusselement (62) zum Blockieren der Axialbewegung des Rades (13) zum Schaft (59), und
- ein am zweiten Ende ausgebildetes zweites axial wirkendes und radial steifes Formschlusselement (60) zum Blockieren der Axialbewegung des Schaftes (59) zum Nabenflansch (24).

8. Klemmbaustein (58) nach Anspruch 7,
**dadurch gekennzeichnet, dass** der Schaft (59) als Hohlschaft (59) mit darin gehaltenen in Umfangsrichtung wirkenden Formschlusselementen (70) ausgebildet ist.

9. Klemmbaustein (58) nach Anspruch 7 oder 8,
**dadurch gekennzeichnet, dass** der Schaft (59) zum zweiten Ende hin, unterhalb des ersten axial wirkenden Formschlusselements (62), eine Anschlagschulter (nicht separat referenziert) besitzt.

10. Klemmbausteinmodell (2) umfassend ein Fahrzeugchassis (12), an dem ein Radlager (44) gehalten ist, wobei am Radlager (44) ein Klemmbaustein (23) nach einem der Ansprüche 1 bis 6 gehalten ist, und wobei an dem Klemmbaustein (23) ein Rad (13) gehalten und mittels eines weiteren Klemmbausteins (58) nach einem der Ansprüche 7 bis 9 axial fixiert ist.
